# EUROPÄISCHE PATENTSCHRIFT

(11) **EP 0 864 160 B1**
(45) Veröffentlichungstag und Bekanntmachung des Hinweises auf die Patenterteilung: **26.01.2000**
(21) Anmeldenummer: 96941035.6
(22) Anmeldetag: 26.11.1996
(51) Int. Cl.: G21C 19/317, G21C 9/00, G21C 9/06

(54) **SICHERHEITSBEHÄLTER EINES KERNKRAFTWERKES**
CONTAINMENT FOR USE AT A NUCLEAR POWER STATION
ENCEINTE DE CONFINEMENT D'UNE CENTRALE NUCLEAIRE

(30) Priorität: 28.11.1995 DE 19544346
(43) Veröffentlichungstag der Anmeldung: 16.09.1998
(73) Patentinhaber: SIEMENS AKTIENGESELLSCHAFT, 80333 München (DE)
(72) Erfinder: KOLEV, Nikolay, D-91074 Herzogenaurach (DE)
(86) Internationale Anmeldenummer: EP9605230
(87) Internationale Veröffentlichungsnummer: WO9720321

(56) Entgegenhaltungen:
- US-A- 4 425 495
- NUCLEAR ENGINEERING INTERNATIONAL, Bd. 37, Nr. 456, Juli 1992, HAYWARDS HEATH GB, Seiten 21-28, XP002027159 REINHARD HECK, AXEL HILL: "A two-pronged approach to hydrogen reduction"

## Beschreibung

Die Erfindung betrifft einen Sicherheitsbehälter eines Kernkraftwerkes mit einer Vorrichtung zur Zündung von in einem Wasserstoff-Luft-Gemisch enthaltenem Wasserstoff.

In einem Kernkraftwerk wird aus Vorsichtsgründen - und sei dies noch so unwahrscheinlich - bei Stör- und/oder Unfallsituationen, bei denen beispielsweise aufgrund von Kernaufheizung eine Oxydation von Zirkonium auftreten kann, mit der Bildung und Freisetzung von Wasserstoffgas innerhalb des den Reaktorkern umschließenden Sicherheitsbehälters oder Containments gerechnet. Dadurch kann innerhalb des Containments ein explosives Gasgemisch, insbesondere ein Wasserstoff-Luft-Gemisch, entstehen.

Zur Verhinderung der Bildung eines derartigen explosiven Gasgemisches im Containment eines Kernkraftwerks werden verschiedene Einrichtungen oder Verfahren diskutiert. Hierzu gehören beispielsweise Einrichtungen wie katalytische Rekombinatoren oder katalytisch und/oder elektrisch betriebene Zündeinrichtungen zur Zündung von Wasserstoff. Bei seiner Zündung reagiert der Wasserstoff mit im Sicherheitsbehälter in der Luft vorhandenem Sauerstoff zu Wasser und wird somit rekombiniert. Eine derartige Zündeinrichtung ist beispielsweise aus der Deutschen Offenlegungsschrift DE 41 25 085 A1 bekannt. Alternativ werden auch Verfahren einer permanenten oder nachträglichen Inertisierung des Containments in Betracht gezogen.

Bei einer üblicherweise verwendeten elektrisch betriebenen Zündeinrichtung ist, wie beispielsweise in der Deutschen Patentschrift DE-30 04 677-C beschrieben, eine Vielzahl von Zündern oder Zündkerzen innerhalb des Sicherheitsbehälters des Kernkraftwerks angeordnet. Jeder dieser Zünder ist dazu geeignet, den Wasserstoff des Wasserstoff-Luft-Gemisches in seiner unmittelbaren Umgebung zu zünden und somit zu rekombinieren. Die Wirkung eines derartigen Zünders ist daher lokal eng begrenzt. Es ist also mit derartigen Zündern unmöglich, innerhalb des gesamten Sicherheitsbehälters die Wasserstoffkonzentration auf einem gleichmäßig niedrigen Niveaus unterhalb eines vorgegebenen Grenzwertes zu halten.

Der Erfindung liegt daher die Aufgabe zugrunde, den Sicherheitsbehälter eines Kernkraftwerkes für die Zündung von in einem Wasserstoff-Luft-Gemisch enthaltenem Wasserstoff so auszurüsten, daß bei einem Störfall die Aufrechterhaltung einer besonders niedrigen Wasserstoffkonzentration in seinem gesamten Innenraum sichergestellt werden kann.

Diese Aufgabe wird für einen Sicherheitsbehälter eines Kernkraftwerkes der obengenannten Art erfindungsgemäß gelöst durch eine zentrale Elektrode zur Blitzerzeugung, die mit einer Hochspannungsquelle zur Erzeugung einer Hochspannung von mehr als der Durchschlagspannung von Luft verbunden ist.

In einem derartig ausgebildeten Sicherheitsbehälter kann aufgrund der elektrischen Potentialdifferenz zwischen der zentralen Elektrode und geerdeten Einbauteilen jedes geerdete Einbauteil als Gegenelektrode für eine Blitzerzeugung durch eine Funkenentladung wirken. Die im Störfall unter Hochspannung gesetzte zentrale Elektrode entlädt sich dann über eine Blitzentladung zur Gegenelektrode. Die Blitze sind dabei an sich chaotisch, so daß jede mögliche Gegenelektrode nach statistischen Kriterien Ziel einer Blitzentladung wird. Die Blitzentladungen durchdringen somit den gesamten Innenraum des Sicherheitsbehälters, wobei je nach Anordnung von Einbauteilen Teilräume innerhalb des Sicherheitsbehälters mit besonderer Häufigkeit durchdrungen werden können. Somit ist sichergestellt, daß sich keine von den chaotischen Blitzentladungen ausgenommenen Teilräume bilden, in denen die Wasserstoffkonzentration einen kritischen Wert überschreiten könnte.

Die Hochspannungsquelle kann als Gleichspannungsquelle, beispielsweise in der Art eines Van-De-Graaff-Generators, ausgebildet sein. Um jedoch eine Gefährdung der Einbauteile des Sicherheitsbehälters oder auch von Bedienpersonal durch die Blitzentladungen auszuschließen, ist die Hochspannungsquelle vorteilhafterweise zur Erzeugung einer Hochspannung mit einer Frequenz von mehr als 1 kH ausgebildet. Einerseits ist nämlich die frequenzabhängige Durchschlagspannung von Luft für hohe Frequenzen niedriger als für niedrige Frequenzen. Eine Blitzentladung bei einer hohen Frequenz ist dann bereits bei einer im Vergleich zu einer niedrigen Frequenz geringen Spitzenspannung auslösbar. Andererseits werden die von der mit einer derartigen Hochfrequenz-Hochspannungsquelle verbundenen zentralen Elektrode ausgehenden Blitzentladungen aufgrund des Skin-Effekts bereits bei einer sehr geringen Eindringtiefe in die Gegenelektrode oder ein Einbauteil abgeschirmt und vermögen somit nicht in das Innere des jeweiligen Einbauteils einzudringen.

In weiterer zweckmäßiger Ausgestaltung ist im Innenraum des Sicherheitsbehälters eine Anzahl von Gegenelektroden zur Blitzableitung angeordnet. Durch die Gegenelektroden kann eine Vorzugsrichtung für eine Blitzentladung definiert werden. Dadurch wird der die Gegenelektroden umgebende Teilraum des Sicherheitsbehälters bevorzugt von den Blitzentladungen durchdrungen. Somit ist Wasserstoff, der beispielsweise in einem als Wasserstoffquelle bekannten Teilraum des Sicherheitsbehälters bevorzugt entsteht, durch eine Anzahl von Gegenelektroden in diesem Teilraum besonders effektiv zündbar.

Jedoch ist auch bei einem Sicherheitsbehälter mit einer Anzahl derartiger Gegenelektroden, wenn auch mit herabgesetzter Wahrscheinlichkeit, die Durchdringung des nicht mit Gegenelektroden versehenen Teilraums des Sicherheitsbehälters durch Blitzentladungen gewährleistet. Somit ist auch für einen derartigen Sicherheitsbehälter die Zündung von Wasserstoff in seinem gesamten Innenraum oder Volumen sichergestellt.

Die mit der Erfindung erzielten Vorteile bestehen insbesondere darin, daß durch die mit der Hochspannungsquelle verbundene zentrale Elektrode zur Blitzerzeugung chaotische Blitzentladungen zwischen der zentralen Elektrode und als Gegenelektrode wirkenden Einbauteilen des Sicherheitsbehälters erzeugbar sind. Derartige chaotische Blitzentladungen durchdringen das gesamte Volumen des Sicherheitsbehälters einschließlich derjenigen Teilgebiete oder Teilräume des Sicherheitsbehälters, die durch übliche Zündeinrichtungen nicht ausreichend erreichbar sind. Dadurch ist eine volumetrische Bindung des Wasserstoffs, d.h. eine Bindung des Wasserstoffs im gesamten Volumen des Sicherheitsbehälters gewährleistet.

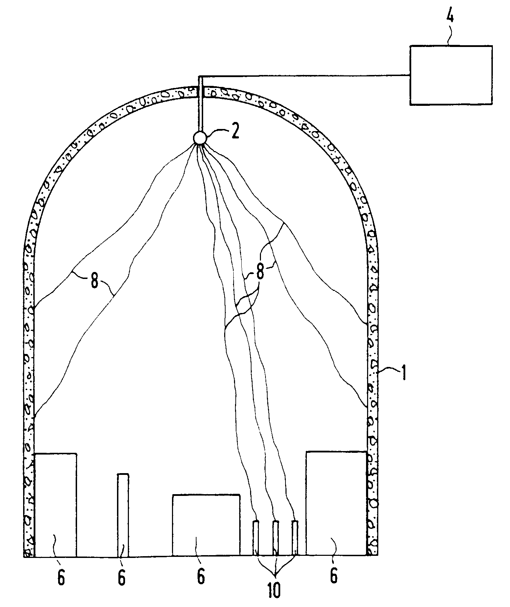

Ein Ausführungsbeispiel der Erfindung wird anhand einer Zeichnung näher erläutert. Darin zeigt die Figur einen Sicherheitsbehälter eines Kernkraftwerkes mit einer einzelnen Elektrode zur Blitzerzeugung.

Der Sicherheitsbehälter 1 des nicht näher dargestellten Kernkraftwerks weist eine zentrale Elektrode 2 zur Zündung von in einem Wasserstoff-Luft-Gemisch enthaltenem Wasserstoff auf. Die zentrale Elektrode 2 ist mit einer Hochspannungsquelle 4 verbunden. Die Hochspannungsquelle 4 ist als Hochfrequenz-Hochspannungsquelle zur Erzeugung einer Hochspannung von mehr als der Durchschlagspannung von Luft mit einer Frequenz von mehr als 1 kHz ausgebildet. Die Durchschlagspannung von Luft ist ermittelt aus der frequenzabhängigen Durchschlagsfeldstärke von Luft und den Abmessungen des Sicherheitsbehälters 1.

Innerhalb des Sicherheitsbehälters 1 ist eine Anzahl von Einbauteilen 6 angeordnet. Die Einbauteile 6 umfassen dabei einen Reaktorkern sowie weitere Betriebs- und Wartungsvorrichtungen.

Bei einer Stör- oder Unfallsituation, und sei sie auch noch so unwahrscheinlich, kann innerhalb des Sicherheitsbehälters 1 Wasserstoffgas freigesetzt werden. Zur Verhinderung der Bildung eines explosiven Gasgemisches wird dieser freigesetzte Wasserstoff gezündet. Dazu wird die mit der Hochspannungsquelle 4 verbundene zentrale Elektrode 2 aktiviert. Die Hochspannungsquelle 4 erzeugt zu diesem Zweck eine Hochspannung von mehr als der Durchschlagspannung von Luft, bezogen auf die inneren Abmessungen des Sicherheitsbehälters 1. Diese Hochspannung bewirkt Entladungen der zentralen Elektrode 2 in Form von Blitzen 8. Als Gegenelektrode kann dabei jedes Einbauteil 6 oder auch ein anderes Strukturteil, wie beispielsweise die Wand des Sicherheitsbehälters 1, fungieren. Aufgrund der chaotischen Natur, d.h. des statistischen Auftretens, der Blitze 8 wird bereits nach kurzer Zeit das gesamte Volumen innerhalb des Sicherheitsbehälters 1 von den Blitzen 8 durchdrungen. Somit wird im gesamten Volumen innerhalb des Sicherheitsbehälters 1 der freigesetzte Wasserstoff gezündet, so daß die Überschreitung eines kritischen Grenzwertes für die Wasserstoffkonzentration im gesamten Volumen innerhalb des Sicherheitsbehälters 1 sicher vermieden ist.

Zur Erzeugung einer Vorzugsrichtung der Blitze 8 ist eine Anzahl von Gegenelektroden 10 in einem Teilbereich oder Teilraum innerhalb des Sicherheitsbehälters 1 angeordnet, in dem mit höherer Wahrscheinlichkeit mit der Freisetzung von Wasserstoffgas gerechnet werden muß. Dieser als mögliche Wasserstoffquelle erkannte Teilbereich wird somit besonders häufig von Blitzen 8 durchdrungen, so daß der dort freigesetzte Wasserstoff besonders zuverlässig gezündet wird.

## Patentansprüche

1. Sicherheitsbehälter eines Kernkraftwerkes mit einer Vorrichtung zur Zündung von in einem Wasserstoff-Luft-Gemisch enthaltenem Wasserstoff,
**dadurch gekennzeichnet**, daß die Vorrichtung eine zentrale Elektrode (2) zur Blitzerzeugung umfaßt, die mit einer Hochspannungsquelle (4) zur Erzeugung einer Hochspannung von mehr als der Durchschlagspannung von Luft verbunden ist.

2. Sicherheitsbehälter nach Anspruch 1,
**dadurch gekennzeichnet,** daß die Hochspannungsquelle (4) zur Erzeugung einer Hochspannung mit einer Frequenz von mehr als 1 kHz ausgebildet ist.

3. Sicherheitsbehälter nach Anspruch 1 oder 2,
**gekennzeichnet durch** eine Anzahl von in seinem Innenraum angeordneten Gegenelektroden (10) zur Blitzableitung.

## Claims

1. Containment of a nuclear power station, having a device for igniting hydrogen contained in a hydrogen/air mixture, characterized in that the device comprises a central electrode (2) for lightning flash generation, which is connected to a high-voltage source (4) for generating a high voltage greater than the disruptive discharge voltage of air.

2. Containment according to Claim 1, characterized in that the high-voltage source (4) is designed to generate a high voltage with a frequency of more than 1 kHz.

3. Containment according to Claim 1 or 2, characterized by a number of counter-electrodes (10) for conducting lightning flashes which are arranged in its interior.

## Revendications

1. Enceinte de confinement d'une centrale nucléaire comprenant un dispositif pour enflammer de l'hydrogène contenu dans un mélange hydrogène-air, caractérisée en ce que le dispositif comprend une électrode centrale (2) servant à produire des éclairs et qui est reliée à une source de haute tension (4) destinée à produire une haute tension supérieure à la tension de claquage de l'air.

2. Enceinte de confinement selon la revendication 1, caractérisée en ce que la source de haute tension (4) est exécutée de manière à produire une haute tension ayant une fréquence supérieure à 1 kHz.

3. Enceinte de confinement selon l'une des revendications 1 ou 2, caractérisée par un nombre de contre-électrodes (10) situées à l'intérieur de l'enceinte pour l'évacuation des éclairs.
